# EUROPÄISCHE PATENTSCHRIFT

(11) **EP 1 127 230 B1**
(45) Veröffentlichungstag und Bekanntmachung des Hinweises auf die Patenterteilung: **18.09.2002**
(21) Anmeldenummer: 99960781.5
(22) Anmeldetag: 16.10.1999
(51) Int. Cl.: F16H 3/12, F16H 3/00, B60K 6/02

(54) **GETRIEBE FÜR EIN KRAFTFAHRZEUG, INSBESONDERE DOPPELKUPPLUNGS-SCHALTGETRIEBE, UND VERFAHREN ZUM BETREIBEN DES GETRIEBES**
GEARBOX FOR A MOTOR VEHICLE, ESPECIALLY A GEARBOX WITH A DUAL CLUTCH AND METHOD FOR OPERATING SAID GEARBOX
TRANSMISSION POUR VEHICULE AUTOMOBILE, EN PARTICULIER TRANSMISSION MECANIQUE A EMBRAYAGE DOUBLE, ET PROCEDE POUR FAIRE FONCTIONNER CETTE TRANSMISSION

(30) Priorität: 03.11.1998 DE 19850549
(43) Veröffentlichungstag der Anmeldung: 29.08.2001
(73) Patentinhaber: ROBERT BOSCH GMBH, 70442 Stuttgart (DE)
(72) Erfinder: LOEFFLER, Juergen, D-71638 Ludwigsburg (DE)
(86) Internationale Anmeldenummer: DE9903323
(87) Internationale Veröffentlichungsnummer: WO00026559

(56) Entgegenhaltungen:
- EP-A- 0 724 977
- EP-A- 0 845 618
- FR-A- 1 445 735

## Beschreibung

### Stand der Technik

Die Erfindung betrifft ein Getriebe für ein Kraftfahrzeug, insbesondere Doppelkupplungs-Schaltgetriebe, nach dem Oberbegriff des Anspruchs 1.

Bei derartigen, z.B. aus FR-A-1 445 735 bekannten Getrieben werden für einen Gangwechsel die Drehzahlen der zu schaltenden Glieder mittels einer Synchronisiereinrichtung, welche in der Regel Synchronisierringe aufweist, aneinander angeglichen. Weiterhin ist zum Starten des Verbrennungsmotors des Kraftfahrzeugs ein separater Anlasser vorgesehen, der bei getrennten Kupplungen die Kurbelwelle des Verbrennungsmotors dreht. Dieser wird von der Batterie des Kraftfahrzeugs mit Energie gespeist, welche wiederum von einer Lichtmaschine ständig aufgeladen wird. Die bekannten Getriebe bzw. das Kraftfahrzeug benötigt somit eine Reihe von Nebenaggregaten zum Betrieb, wobei die Synchronisiereinrichtungen mehr oder weniger aufwendig aufgebaut sind.

### Vorteile der Erfindung

Das erfindungsgemäße Getriebe für ein Kraftfahrzeug, insbesondere Doppelkupplungs-Schaltgetriebe, mit den kennzeichnenden Merkmalen des Anspruchs 1 hat demgegenüber den Vorteil, daß durch die mit der wenigstens einen Eingangswelle gekoppelte Elektromaschine auf einen Starter bzw. Anlasser und einen Generator für den Verbrennungsmotor verzichtet werden kann. Darüber hinaus ist eine einfache Synchronisation der zu schaltenden Glieder der Gänge ohne zusätzliche Synchronisiereinrichtungen möglich.

Weitere Vorteile und vorteilhafte Weiterbildungen des erfindungsgemäßen Getriebes für ein Kraftfahrzeug, insbesondere Doppelkupplungs-Schaltgetriebe, ergeben sich aus den Unteransprüchen und der Beschreibung.

Eine relativ kleine Baugröße der Elektromaschinen ist erforderlich, wenn jede der beiden Eingangswellen mit einer separaten Elektromaschine ausgestattet ist. Außerdem läßt sich in diesem Fall eine relativ einfache Ankopplung an die Eingangswellen erzielen. Demgegenüber ist es bei Verwendung eines Verteilergetriebes möglich, lediglich eine einzige Elektromaschine zu verwenden, welche mit der einen oder der anderen Eingangswelle koppelbar ist.

Das Betreiben eines Kraftfahrzeugs mit einem erfindungsgemäßen Getriebe hat den besonderen Vorteil, daß im Schiebebetrieb des Kraftfahrzeugs die Rollenergie des Kraftfahrzeugs in eine die Bordbatterie ladende elektrische Energie umgewandelt werden kann, wenn die Elektromaschine(n) im Schiebebetrieb als Genarator wirken. Ferner ist es möglich, zum Rückwärtsfahren des Kraftfahrzeugs auf einen entsprechenden Zahnradsatz im Getriebe zu verzichten, wenn eine Elektromaschine einen Vorwärtsgang rückwärts antreibt.

Außerdem ist es auch möglich, die Elektromaschine(n) als zusätzlichen Antrieb zu verwenden, der den Verbrennungsmotor unterstützt, um kurzzeitig, beispielsweise bei Überholvorgängen, eine größere Gesamtleistung bereitzustellen.

### Zeichnung

Zwei Ausführungsbeispiele der Erfindung sind in der Zeichnung dargestellt und werden nachfolgend näher erläutert. Es zeigen:
Figur 1 einen ersten Antriebsstrang eines Kraftfahrzeugs in einer schematischen Darstellung und
Figur 2 einen zweiten Antriebsstrang eines Kraftfahrzeugs ebenfalls in einer schematischen Darstellung.

### Beschreibung der Ausführungsbeispiele

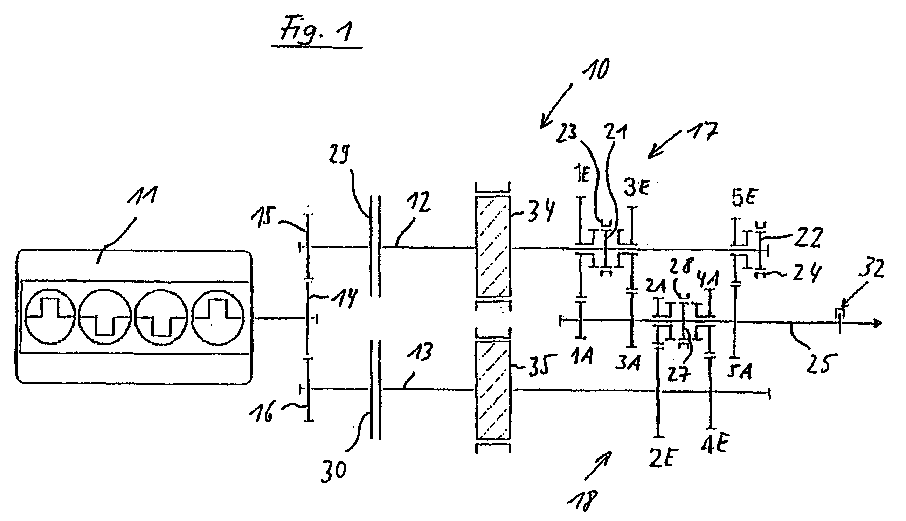

In der Figur 1 ist mit 10 ein Getriebe eines Kraftfahrzeugs bezeichnet, das an einen Verbrennungsmotor 11 angekoppelt ist. Das Getriebe 10 ist als sogenanntes Doppelkupplungs-Schaltgetriebe ausgebildet. Dazu weist das Getriebe 10 zwei Eingangswellen 12, 13 auf, die mittels jeweils eines auf der Eingangswelle 12, 13 drehfest befestigten Zahnrades 15, 16 mit einem auf der Kurbelwelle des Verbrennungsmotors 11 befestigten Zahnkranz 14 gekoppelt sind. Anstelle einer Übersetzung durch die Zahnräder 15, 16 und den Zahnkranz 14 können die beiden Eingangswellen 12, 13 jedoch auch direkt von der Kurbelwelle angetrieben werden.

Auf den Eingangswellen 12 und 13 sind weiterhin Zahnradgruppen 17 und 18 angeordnet. Die erste Zahnradgruppe 17 umfaßt die drehbeweglich auf der Eingangswelle 12 angeordneten Zahnräder 1E, 3E, 5E und die zweite Zahnradgruppe 18 die drehfest auf der zweiten Eingangswelle 13 angeordneten Zahnräder 2E und 4E. Ferner sind auf der ersten Eingangswelle 12 zwei verdrehfest auf dieser befestigte Zahnräder 21, 22 angeordnet, wovon sich das eine Zahnrad 21 zwischen den beiden Zahnrädern 1E und 3E befindet. Mit den Zahnrädern 21, 22 wirkt jeweils eine Schiebemuffe 23, 24 zusammen, die das Zahnrad 21, 22 in Eingriff mit dem jeweiligen Zahnrad 1E, 3E oder 5E bringt.

Die beiden Eingangswellen 12, 13 sind mit einer Ausgangswelle 25 koppelbar, die die Antriebswelle des Kraftfahrzeugs bildet oder aber zur Antriebswelle führt. Auf der Ausgangswelle 25 sind die zu den Zahnradgruppen 17, 18 korrespondierenden Zahnräder 1A bis 5A angeordnet, wovon die Zahnräder 1A, 3A und 5A drehfest, und die Zahnräder 2A und 4A drehbeweglich auf der Ausgangswelle 25 befestigt sind. Ferner ist auf der Ausgangswelle 25 zwischen den Zahnrädern 2A und 4A ein Zahnrad 27 drehfest befestigt, das mit einer Schiebemuffe 28 zusammenwirkt, um den Kraftfluß mit dem Zahnrad 2A oder 4A zu ermöglichen.

Um den Verbrennungsmotor 11 mittels der Eingangswelle 12 bzw. 13 mit der Ausgangswelle 25 zu koppeln, ist weiterhin zwischen dem Verbrennungsmotor 11 und den Zahnradgruppen 17, 18 jeder Eingangswelle 12, 13 jeweils eine Kupplung 29, 30 zugeordnet. Wenn beide Kupplungen 29, 30 getrennt sind, kann es, z. B. wenn das Kraftfahrzeug an einem Berg steht, zu einem unerwünschten Zurückrollen des Kraftfahrzeugs kommen. Um dies zu verhindern, ist im Bereich der Ausgangswelle 25 eine sogenannte Hill-Holder-Einrichtung 32 angeordnet, die als Feststellbremse wirkt. Um das erwähnte Zurückrollen des Kraftfahrzeugs sowie die Drehzahlen und ggf. die Winkelstellungen der Zahnräder 1A bis 5A, 1E bis 5E, 21, 22, 27 zu erkennen, sind im Bereich der Eingangswellen 12, 13 sowie der Ausgangswelle 25 weiterhin nicht dargestellte Sensoren angeordnet, die mit einem Getriebesteuergerät des Getriebes 10 gekoppelt sind.

Wesentlich für die Erfindung ist, daß im Ausführungsbeispiel gemäß der Figur 1 jede der Eingangswellen 12, 13 mit einer separaten Elektromaschine 34, 35 kraftschlüssig verbunden ist, die jeweils wiederum an die Bordbatterie des Kraftfahrzeugs angeschlossen ist. Die kraftschlüssige Verbindung erfolgt im einfachsten Fall dadurch, daß die Elektromaschinen 34, 35 jeweils eine axial durchgehende Läuferwelle aufweisen, die Bestandteil der Eingangswelle 12 bzw. 13 ist. Es sind jedoch auch andere Kopplungen, beispielsweise über ein Ritzel der Elektromaschine 34, 35, das mit einem auf der Eingangswelle 12, 13 angeordneten Zahnrad zusammenwirkt, denkbar. Auch können die Elektromaschinen 34, 35 über jeweils ein Zwischengetriebe mit der Eingangswelle 12, 13 kraftschlüssig verbunden sein. Die Elektromaschinen 34, 35 befinden sich im Ausführungsbeispiel jeweils zwischen den Kupplungen 29, 30 und den entsprechenden Zahnradgruppen 17, 18. Um die Funktion der Elektromaschinen 34, 35 im Getriebe 10 zu erklären, wird nunmehr auf verschiedene Betriebszustände eingegangen:

Zum Starten des Verbrennungsmotors 11 sind die Eingangszahnräder 1E bis 5E von den Ausgangszahnrädern 1A bis 5A auf der Ausgangswelle 25 entkoppelt, das Getriebe 10 ist somit im Leerlauf geschaltet. Dies geschieht dadurch, daß sich die Schiebemuffen 23, 24, 28 in ihrer Mittelstellung befinden, in der sie sich jeweils nur in Deckung mit den entsprechenden Zahnrädern 21, 22, 27 befinden. Um ein Rückrollen des Kraftfahrzeugs zu verhindern ist gleichzeitig die Hill-Holder-Einrichtung 32 aktiviert. Die Übertragung eines Startdrehmoments auf die Kurbelwelle des Verbrennungsmotors 11 erfolgt nun nicht mehr wie üblich durch einen separaten Anlasser, sondern durch wenigstens eine der beiden Elektromaschinen 34, 35. Um die erforderliche Leistung bzw. die Baugröße der Elektromaschinen 34, 35 zu reduzieren, erfolgt das Anlassen jedoch bevorzugt durch beide Elektromaschinen 34, 35 gemeinsam. In diesem Fall sind die beiden Kupplungen 29, 30 geschlossen, so daß eine kraftschlüssige Verbindung zwischen den Elektromaschinen 34, 35 und der Kurbelwelle des Verbrennungsmotors 11 hergestellt ist. Ist dies erfolgt, werden die beiden Elektromaschinen 34, 35 synchron und mit derselben Drehzahl als von der Bordbatterie des Kraftfahrzeugs gespeiste Elektromotoren betrieben, wobei die Drehzahl der Elektromotoren der erforderlichen Startdrehzahl des Verbrennungsmotors 11 entspricht.

Ergänzend sei an dieser Stelle erwähnt, daß für den Fall, daß die Übertragung des Startdrehmoments nur durch eine der beiden Elektromaschinen 34, 35 erfolgen soll, die Kupplung 29, 30 der jeweils anderen Elektromaschine 35, 34 bevorzugt getrennt ist, damit die Eingangswelle 12, 13 der nicht zum Starten benutzten Elektromaschine 34, 35 nicht mitgedreht. Dies hätte ansonsten einen zusätzlichen Energiebedarf an der zum Starten verwendeten Elektromaschine 34, 35 zur Folge.

Ist der Verbrennungsmotor 11 gestartet, so wird die eine bzw. beide zuvor geschlossenen Kupplungen 29, 30 wieder getrennt. Zum Anfahren im ersten Gang, der durch das ineinander kämmende Zahnradpaar 1E und 1A gebildet wird, ist es erforderlich, einen Kraftfluß vom Zahnrad 1E zum Zahnrad 1A zu ermöglichen. Dies erfolgt dadurch, daß die Schiebemuffe 23 auf dem Zahnrad 21 so verschoben wird, daß dieses in Wirkverbindung mit dem Zahnrad 1E gebracht wird. Sollte sich jedoch die Eingangswelle 12 in einer derartigen Winkellage befinden, daß sich die Schiebemuffe 23 nicht auf das Zahnrad 1E überschieben läßt, so wird durch einen kurzzeitigen Impuls der Elektromaschine 34 die Eingangswelle 12 in die dafür erforderliche Winkelstellung gedreht. Der erste Gang ist nun geschaltet, und zum Anfahren des Kraftfahrzeugs muß nun lediglich noch die Kupplung 29 wieder geschlossen werden, wobei gleichzeitig die Hill-Holder-Einrichtung 32 deaktiviert wird.

Im folgenden wird ein Gangwechsel am Beispiel des Hochschaltens vom ersten in den zweiten Gang beschrieben: Dazu ist es erforderlich, das Zahnradpaar 2E, 2A mit der Drehzahl der Ausgangswelle 25 zu synchronisieren, welche vom Zahnradpaar 1E, 1A des ersten Gangs gedreht wird. Die Angleichung der Drehzahlen erfolgt dadurch, daß das Zahnrad 2A mit einer Drehzahl angetrieben wird, die der Drehzahl der Antriebswelle 25 und des Zahnrads 27 entspricht. Dazu wird bei getrennter Kupplung 30 die Elektromaschine 35 als Elektromotor betrieben, der die Eingangswelle 13 und somit das Zahnrad 2E mit einer derartigen Drehzahl antreibt, daß sich das Zahnrad 2A mit der Drehzahl der Ausgangswelle 25 dreht. Jetzt kann die Schiebemuffe 28 in Wirkverbindung mit dem Zahnrad 2A gebracht werden, wodurch ein Kraftschluß zwischen der Ausgangswelle 25 und der Eingangswelle 13 hergestellt wird. Anschließend kann die Elektromaschine 35 stromlos geschaltet werden. Da sich in diesem Zustand sowohl die Zahnräder 1E, 1A des ersten Gangs, als auch die Zahnräder 2E, 2A des zweiten Gangs mit der Ausgangswelle 25 in Wirkverbindung befinden, genügt es zuletzt, die eine Kupplung 29 zu öffnen und gleichzeitig die andere Kupplung 30 zu schließen, wodurch sich ein Gangwechsel vom ersten in den zweiten Gang ohne Zugkraftunterbrechung erzielen läßt. Weiterhin wird die Schiebemuffe 23 noch außer Eingriff mit dem Zahnrad 1E gebracht.

Die weiteren Gangwechsel beim Hochschalten des Getriebes 10 erfolgen sinngemäß derart, daß jeweils die Synchrondrehzahl der Eingangswelle 12, 13 des nächsthöheren Zielgangs durch die mit der jeweiligen Eingangswelle 12, 13 gekoppelte Elektromaschine 34, 35 eingestellt wird. Ist dies erfolgt, können die Zahnräder 3E, 4A und 5E mittels der Schiebemuffen 23, 24, 27 mit den Zahnrädern 21, 22, 27 in Eingriff gebracht werden. Anschließend wird der Kraftfluß zwischen dem Zielgang und dem Verbrennungsmotor 11 durch Schließen der einen Kupplung 29, 30 des Zielgangs und Öffnen der anderen Kupplung 29, 30 des ursprünglich eingelegten Gangs hergestellt, und die Schiebmuffe 23, 24, 28 von dem ursprünglich in Eingriff befindlichen Zahnrad 3E, 4A, 5E verschoben.

Das Zurückschalten der Gänge des Getriebes 10 wird nachfolgend exemplarisch beim Gangwechsel vom dritten in den zweiten Gang erläutert: Fährt das Kraftfahrzeug im dritten Gang, so wird die Ausgangswelle 25 über die Zahnräder 3E, 3A und die Eingangswelle 12 über die geschlossene Kupplung 29 vom Verbrennungsmotor 11 getrieben. Die Kupplung 30 ist demgegenüber getrennt, und das Zahnrad 2A dreht sich lose auf der Ausgangswelle 25. Das Zahnrad 2A wird jetzt durch Antreiben der Eingangswelle 13 mittels der Elektromaschine 35 auf die erforderliche Drehzahl gebracht, bei der es sich mit der Drehzahl des Zahnrads 27 auf der Ausgangswelle 25 dreht. Nun kann das Zahnrad 27 mittels der Schiebemuffe 28 mit dem Zahnrad 2A gekoppelt werden. Zuletzt wird die Kupplung 30 geschlossen, die Kupplung 29 getrennt und die mit dem Zahnrad 3E befindliche Schiebemuffe 23 von diesem außer Eingriff gebracht. Auch hier erfolgen weitere Gangwechsel bei Herunterschalten sinngemäß.

Abschließend werden verschiedene zusätzliche Möglichkeiten des Getriebes 10 aufgezeigt: In der dargestellten Version besitzt das Getriebe 10 keinen Zahnradsatz für das Rückwärtsfahren des Kraftfahrzeugs. Ein Rückwärtsfahren kann dadurch erfolgen, daß bei getrennten Kupplungen 29, 30 der erste Gang in Eingriff mit der Ausgangswelle 25 gebracht wird, und der erste Gang von der Elektromaschine 34 in umgekehrter Drehrichtung angetrieben wird. In diesem Fall wird die Drehzahl der Elektromaschine 34 von der Gaspedalstellung bestimmt. Da Rückwärtsfahrten in der Regel nur eine kurze Fahrtstrecke umfassen, dürfte die dazu erforderliche Energie von der Bordbatterie lieferbar sein. Um hier jedoch ggf. Sicherheit für genügend lange Rückwärtsfahrtstrecken zu schaffen, kann jedoch während des Rückwärtsfahrens auch die andere Kupplung 30 geschlossen sein, wobei sich jedoch die Gänge 2 oder 4 nicht in Wirkverbindung mit der Ausgangswelle 25 befinden dürfen. In diesem Zustand wird die Elektromaschine 35 über die Kupplung 30 von der Kurbelwelle des Verbrennungsmotors 11 getrieben. Die Elektromaschine 35 kann deshalb als Generator bzw. Lichtmschine wirken, die Energie in die Bordbatterie einspeist.

Das Speisen der Bordbatterie erfolgt üblicherweise durch eine Lichtmaschine, die vom Verbrennungsmotor des Kraftfahrzeugs ständig angetrieben wird, und somit den Kraftstoffverbrauch des Kraftfahrzeugs erhöht. Mit dem Getriebe 10 ist es möglich, die zum Laden der Bordbatterie erforderliche Energie aus der kinetischen (Roll-) Energie des Kraftfahrzeugs zumindest teilweise zurückzugewinnen. Dazu wird im Schiebebetrieb des Kraftfahrzeugs die Kupplung 29, 30 des gerade eingelegten Gangs getrennt, und die Elektromaschine 34, 35 über die Ausgangswelle 25 vom rollenden Kraftfahrzeug als Generator angetrieben. Zusätzlich kann auch der Verbrennungsmotor 11 gestoppt werden, wodurch sich zusätzlich Kraftstoff sparen läßt. Reduziert sich die Rollgeschwindigkeit des Kraftfahrzeugs derart, daß die Drehzahl der Eingangswelle 12, 13 des eingelegten Gangs auf der der Kupplung 29, 30 abgewandten Seite des Verbrennungsmotors 11 die Leerlaufdrehzahl des Verbrennungsmotors 11 zu unterschreiten droht, wird die entsprechende Kupplung 29, 30 wieder geschlossen, wodurch die Kurbelwelle des Verbrennungsmotors 11 wieder gedreht und dieser somit gestartet wird.

Durch die Ankopplung der Elektromaschinen 34, 35 an die Eingangswellen 12, 13 und die Möglichkeit, diese mittels der Kupplungen 29, 30 vom Verbrennungsmotor 11 abzukoppeln wird auf einfache Weise die Möglichkeit eröffnet, das Kraftfahrzeug als Hybridfahrzeug zu betreiben. In diesem Fall wird das Fahrzeug, zum Beispiel im innerstädtischen Betrieb, ausschließlich von den beiden Elektromaschinen 34, 35 angetrieben, während der Verbrennungsmotor 11 ausgeschaltet ist. Für den Einsatz als Hybridfahrzeug ist die Baugröße bzw. Leistung der Elektromaschinen 34, 35 selbstverständlich entsprechend anzupassen, da in diesem Fall sich die benötigte Leistung nicht mehr an dem Anlaßvorgang des Verbrennungsmotors 11 orientiert.

Auf eine separate Lichtmaschine kann dann verzichtet werden, wenn in den Fällen, in denen gerade kein Gangwechsel ansteht und die Spannungslage der Bordbatterie es erforderlich macht, die ansonsten nicht mitdrehende weil kräftefreie der beiden Elektromaschinen 34, 35 über die Kupplung 29, 30 in Wirkverbindung mit dem Verbrennungsmotor 11 gebracht wird und die Elektromaschine 34, 35 dann als Generator bzw. Lichtmaschine wirkt.

Zuletzt wird die Möglichkeit erwähnt, eine oder beide Elektromaschinen 34, 35 zeitweise als zusätzlichen Antrieb für das Kraftfahrzeug zu verwenden, indem diese den Vortrieb durch den Verbrennungsmotor 11 unterstützen ("power assist-Betrieb"). Dazu wird über eine oder beide Elektromaschinen 34, 35 ein Drehmoment auf die Ausgangswelle 25 übertragen, das gleichsinnig wie das vom Verbrennungsmotor 11 erzeugte Drehmoment wirkt. Für den Fall, daß beide Elektromaschinen 34, 35 ein zusätzliches Drehmoment auf die Ausgangswelle 25 übertragen sollen, besteht dabei für die Elektromaschine 34, 35, deren zugeordnete Kupplung 29, 30 zuerst getrennt ist, weil der eingelegte Gang über die andere Eingangswelle 12, 13 eingelegt ist, zwei Möglichkeiten: Zum einen ist es bevorzugt vorgesehen, die betreffende Kupplung 29, 30 zu schließen, damit die betreffende Elektromaschine 34, 35 ihr Drehmoment über das Zahnrad 15, 16 auf den Zahnkranz 14 überträgt, zum anderen ist es jedoch auch denkbar, die entsprechende Kupplung 29, 30 geöffnet zu lassen, und das zusätzliche Drehmoment über ein Zahnradpaar 1E, 1A bis 5E, 5A direkt auf die Ausgangswelle 25 zu übertragen. Dazu muß jedoch, wie bei einem Gangwechsel, zuerst die Drehzahl eines Zahnradpaars 1E, 1A bis 5E, 5A der betreffenden Eingangswelle 12, 13 mit der Drehzahl des gerade im Eingriff befindlichen Zahnradpaars 1E, 1A bis 5E, 5A synchronisiert und anschließend der Kraftschluß zur Ausgangswelle 25 hergestellt werden.

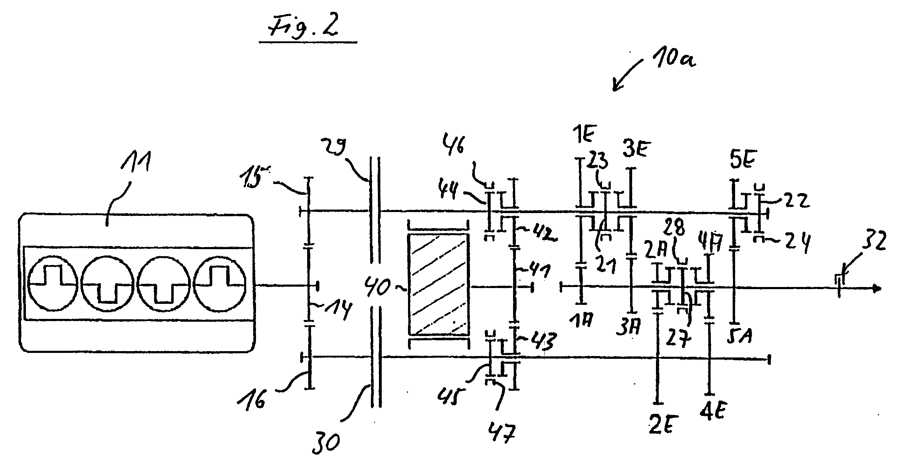

Im Gegensatz zu dem Ausführungsbeispiel entsprechend der Figur 1 ist bei dem Getriebe 10a gemäß der Figur 2 nur eine einzige Elektromaschine 40 erforderlich, die zwischen den Eingangswellen 12, 13 angeordnet ist. Wenn möglich, wurde ansonsten in der Figur 2 für gleiche Bauteile der Getriebe 10 und 10a diesselben Bezugszeichen verwendet. Die Elektromaschine 40 ist mit einem Zahnrad 41 gekoppelt, das zwei andere Zahnräder 42, 43 treibt, die lose auf der Eingangswelle 12 bzw. 13 angeordnet sind. Zusätzliche, fest auf der Eingangswelle 13 und 13 befestigte Zahnräder 44, und 45 stellen über Schiebmuffen 46 und 47 den erforderlichen Kraftschluß zur Elektromaschine 40 her. Die Gangwechsel erfolgen in analoger Weise zum ersten Ausführungsbeispiel dadurch, daß die Synchrondrehzahl der Eingangswelle 12, 13 des Zielgangs durch die Elektromaschine 40 eingestellt wird, die für diesen Fall mittels der Schiebemuffe 46 oder 47 mit der Elektromaschine 40 gekoppelt wird.

Im Gegensatz zum ersten Ausführungsbeispiel erfolgt das Starten des Verbrennungsmotors 11 mittels des Getriebes 10a dadurch, daß die Elektromaschine 40 über die Schaltmuffen 46, 47 mit der Eingangswelle 12 bzw. der Eingangswelle 13 in Wirkverbindung gebracht wird. Bei geschlossener Kupplung 29 bzw. 30 und im Leerlauf befindlicher Ausgangswelle 25 wird somit das Startdrehmoment der Elektromaschine 40 über eine der Eingangswellen 12, 13 oder aber beide Eingangswellen 12, 13 übertragen.

Auch die anderen Betriebszustände wie Rückwärtsfahrt, power assist-Berieb oder Laden der Bordbatterie lassen sich bei dem Geriebe 10a sinngemäß zum Getriebe 10 verwirklichen. Es ist offensichtlich, daß die Elektromaschine 40 gegenüber den Elektromaschinen 34, 35 größer bzw. stärker ausgelegt ist, wobei die Leistung der Elektromaschine 40 insbesondere durch die für das Starten des Verbrennungsmotors 11 erforderliche Leistung bestimmt wird. Dem Minderaufwand durch lediglich eine Elektromaschine steht jedoch ein zusätzlicher konstruktiver Mehraufwand infolge der wahlweise Kopplung der Elektromaschine 40 an die Eingangswelle 12, 13 (zusätzliche Zahnräder 41 bis 45, Schiebemuffen 46, 47) entgegen.

Die in den Figuren 1 und 2 dargestellten Ausführungsbeispiele sind lediglich exemplarisch und daher konstruktiv sehr vereinfacht dargestellt. So ist es bei einer konstruktiven Umsetzung insbesondere aus Raumgründen sinnvoll, die beiden Eingangswellen 12, 13 nicht parallel zueinander anzuordnen, sondern eine der beiden Eingangswellen 12, 13 als Hohlwelle auszubilden, in der sich die andere Eingangswelle 12, 13 dreht.

Auch kann das Getriebe 10, 10a einen herkömmlichen Rückwärtsgang mit einem entsprechenden Zahnradpaar auf der Eingangswelle 12, 13 und der Ausgangswelle 25 aufweisen. In diesem Fall findet das Rückwärtsfahren ausschließlich über eine kraftschlüssige Kopplung mit dem Verbrennungsmotor 11 statt.

Weiterhin soll die Erfindung nicht auf Getriebe beschränkt sein, die eine Ausgangswelle und zwei Eingangswellen aufweisen. Es sind auch Getriebe vom Erfindungsgedanken erfasst, bei denen die Zahnradgruppen zum Beispiel auf einer Eingangs- und einer Ausgangswelle oder aber einer Zwischenwelle angeordnet sind, wie dies in der nicht vorveröffentlicheten Deutschen Patentanmeldung 198 07 374.7 dargestellt ist. Auch Ausführungen mit mehreren Ausgangswellen sind denkbar.

Beide Getriebe 10 und 10a können sowohl als manuelle Schaltgetriebe als auch als automatische Schaltgetriebe ausgebildet bzw. Bestandteil davon sein. In jedem Fall ist es jedoch aufgrund der zum Teil relativ komplexen Vorgänge erforderlich, zur Steuerung bzw. Regelung der einzelnen Vorgänge ein elektronisches Schaltgerät einzusetzen, welches die von den angesprochenen Sensoren erfassten Meßwerte verarbeitet und seinerseits Aktuoren, zum Beispiel zum Verschieben der Schiebemuffen, ansteuert oder verschiedene Betriebsarten anwählt.

## Patentansprüche

1. Getriebe (10; 10a) für ein Kraftfahrzeug mit Verbrennungsmotor, insbesondere Doppelkupplungsschaltgetriebe, mit wenigstens zwei Getriebeeingangswellen (12, 13) und wenigstens einer Getriebeausgangswelle (25), mit mehreren, unterschiedliche Ubersetzungen zwischen den wenigstens zwei Getriebeeingangswellen (12, 13) und der wenigstens einen Getriebeausgangswelle (25) ausbildenden Zahnradpaaren (1E, 1A bis 5E, 5A) und mit zwei, den Verbrennungsmotor (11) des Kraftfahrzeugs mit der wenigstens einen Ausgangswelle (25) kraftschlüssig verbindenden Kupplungseinrichtungen (29, 30), **dadurch gekennzeichnet, daß** wenigstens eine der Getriebeeingangswellen (12, 13) mit wenigstens einer Elektromaschine (34, 35; 40) zumindest koppelbar ist und daß die wenigstens eine Elektromaschine (34, 35; 40) zum Starten des Verbrennungsmotors (11) des Kraftfahrzeugs wenigstens eine der Getriebeeingangswellen (12, 13), welche mit dem Verbrennungsmotor (11) kraftschlüssig verbunden ist, antreibt und zum Rückwärtsfahren des Kraftfahrzeugs bei getrennten Kupplungseinrichtungen (29, 30) wenigstens eine der Getriebeausgangswellen (25) antreibt.

2. Getriebe nach Anspruch 1, **dadurch gekennzeichnet, daß** zwei Getriebeeingangswellen (12, 13), die mit jeweils einer Elektromaschine (34, 35) zusammenwirken und eine Getriebeausgangswelle (25) vorgesehen sind und daß die Elektromaschinen (34, 35) auf den dem Verbrennungsmotor (11) abgewandten Seiten der Kupplungseinrichtungen (29, 30) angeordnet sind.

3. Getriebe nach Anspruch 1, **dadurch gekennzeichnet, daß** zwei Getriebeeingangswellen (12, 13), eine Getriebeausgangswelle (25) und eine Elektromaschine (40) vorgesehen sind, wobei die Elektromaschine (40) mit einer oder beiden Getriebeeingangswellen (12, 13) koppelbar ist.

4. Getriebe nach einem der Ansprüche 1 bis 3, **dadurch gekennzeichnet, daß** der Kraftschluß zwischen der wenigstens einen Elektromaschine (34, 35; 40) und der wenigstens einen Getriebeeingangswelle (12, 13) direkt oder mittels eines Zwischengetriebes erfolgt.

5. Getriebe nach einem der Ansprüche 1 bis 4, **dadurch gekennzeichnet, daß** an der wenigstens einen Getriebeausgangswelle (25) eine Einrichtung (32) zum Sperren der Getriebeausgangswelle (25) angeordnet ist.

6. Verfahren zum Betreiben eines Getriebes (10; 10a) für ein Kraftfahrzeug, insbesondere Doppelkupplungs-Schaltgetriebe, nach Anspruch 1, **dadurch gekennzeichnet, daß** die Synchrondrehzahl der Getriebeeingangswelle (12, 13) eines Zielgangs durch die mit der Getriebeeingangswelle (12, 13) des Zielgangs gekoppelte Elektromaschine (34, 35; 40) erzeugt wird.

7. Verfahren zum Betreiben eines Getriebes (10; 10a) für ein Kraftfahrzeug, insbesondere Doppelkupplungs-Schaltgetriebe, nach Anspruch 1, **dadurch gekennzeichnet, daß** zur Verstärkung des vom Verbrennungsmotor (11) auf die wenigstens eine Getriebeausgangswelle (25) eingeleiteten Drehmoments wenigstens eine Elektromaschine (34, 35; 40) ein zusätzliches Drehmoment auf die wenigstens eine Getriebeausgangswelle (25) in derselben Drehrichtung wie der Verbrennungsmotor (11) einleitet.

8. Verfahren zum Betreiben eines Getriebes (10; 10a) für ein Kraftfahrzeug, insbesondere Doppelkupplungs-Schaltgetriebe, nach Anspruch 1, **dadurch gekennzeichnet, daß** zur Energierückgewinnung im Schiebebetrieb des Kraftfahrzeugs bei getrennten Kupplungseinrichtungen (29, 30) wenigstens eine Elektromaschine (34, 35; 40) von ihrer Eingangswelle (12, 13) angetrieben wird und als Generator wirkt.

## Claims

1. Transmission (10; 10a) for a motor vehicle with an internal combustion engine, in particular dual-clutch shift transmission, with at least two transmission input shafts (12, 13) and at least one transmission output shaft (25), with a plurality of pairs of gearwheels (1E, 1A to 5E, 5A) forming different transmission ratios between the at least two transmission input shafts (12, 13) and the at least one transmission output shaft (25), and with two clutch devices (29, 30) connecting the internal combustion engine (11) of the motor vehicle non-positively to the at least one output shaft (25), **characterized in that** at least one of the transmission input shafts (12, 13) is capable of being at least coupled to at least one electric machine (34, 35; 40), and **in that** the at least one electric machine (34, 35; 40), for the purpose of starting the internal combustion engine (11) of the motor vehicle, drives at least one of the transmission input shafts (12, 13), which is connected non-positively to the internal combustion engine (11), and, for the purpose of reversing the vehicle, with the clutch devices (29, 30) separated, drives at least one of the transmission output shafts (25).

2. Transmission according to Claim 1, **characterized in that** two transmission input shafts (12, 13), which cooperate in each case with an electric machine (34, 35), and one transmission output shaft (25) are provided, and **in that** the electric machines (34, 35) are arranged on those sides of the clutch devices (29, 30) which face away from the internal combustion engine (11).

3. Transmission according to Claim 1, **characterized in that** two transmission input shafts (12, 13), one transmission output shaft (25) and one electric machine (40) are provided, the electric machine (40) being capable of being coupled to one or both transmission input shafts (12, 13).

4. Transmission according to one of Claims 1 to 3, **characterized in that** the non-positive connection between the at least one electric machine (34, 35; 40) and the at least one transmission input shaft (12, 13) is made directly or by means of an intermediate transmission.

5. Transmission according to one of Claims 1 to 4, **characterized in that** a device (32) for locking the transmission output shaft (25) is arranged on the at least one transmission output shaft (25).

6. Method for operating a transmission (10; 10a) for a motor vehicle, in particular a dual-clutch shift transmission, according to Claim 1, **characterized in that** the synchronous rotational speed of the transmission input shaft (12, 13) of an intended gear is generated by the electric machine (34, 35; 40) coupled to the transmission input shaft (12, 13) of the intended gear.

7. Method for operating a transmission (10; 10a) for a motor vehicle, in particular a dual-clutch shift transmission, according to Claim 1, **characterized in that**, in order to amplify the torque introduced to the at least one transmission output shaft (25) by the internal combustion engine (11), at least one electric machine (34, 35; 40) introduces an additional torque to the at least one transmission output shaft (25) in the same direction of rotation as the internal combustion engine (11).

8. Method for operating a transmission (10; 10a) for a motor vehicle, in particular a dual-clutch shift transmission, according to Claim 1, **characterized in that**, in order to recover energy when the motor vehicle is operating in the overrun mode, with the clutch devices (29, 30) separated, at least one electric machine (34, 35; 40) is driven by its input shaft (12, 13) and acts as a generator.

## Revendications

1. Transmission (10, 10a) pour un véhicule automobile équipé d'un moteur à combustion interne, notamment transmission mécanique à double embrayage, ayant au moins deux arbres d'entrée (12, 13) et au moins un arbre de sortie (25), plusieurs rapports différents entre au moins les deux arbres d'entrée (12, 13) et l'arbre de sortie (25) constitués par des paires de pignons dentés (1E, 1A-5E, 5A) et deux embrayages (29, 30) réalisant la liaison de transmission de force entre le moteur à combustion interne (11) du véhicule et l'arbre de sortie (25),
**caractérisée en ce qu'**
au moins l'un des arbres d'entrée (12, 13) de la transmission peut être couplé à au moins une machine électrique (34, 35 ; 40), et
pour démarrer le moteur à combustion interne (11) du véhicule, cette machine électrique (34, 35, 40) entraîne au moins l'un des arbres d'entrée de transmission (12, 13) relié par une liaison par la force au moteur à combustion interne (11), et
pour la marche arrière du véhicule, les embrayages (29, 30) étant séparés, elle entraîne au moins l'un des arbres de sortie de transmission (25).

2. Transmission selon la revendication 1,
**caractérisée par**
deux arbres d'entrée de transmission (12, 13) qui coopèrent chaque fois avec une machine électrique (34, 35), et un arbre de sortie (25), les machines électriques (34, 35) étant montées du côté des installations d'embrayage (29, 30) opposé du moteur à combustion interne (11).

3. Transmission selon la revendication 1,
**caractérisée par**
deux arbres d'entrée (12, 13), un arbre de sortie (25) et une machine électrique (40), la machine électrique (40) pouvant être couplée à l'un ou aux deux arbres d'entrée de transmission (12, 13).

4. Transmission selon l'une quelconque des revendications 1 à 3,
**caractérisée en ce que**
la liaison de transmission de force entre au moins une machine électrique (34, 35 ; 40) et au moins un arbre d'entrée de transmission (12, 13) se fait directement ou par une transmission intermédiaire.

5. Transmission selon l'une quelconque des revendications 1 à 4,
**caractérisée en ce qu'**
une installation (32) pour bloquer l'arbre de sortie (25) de la boîte de vitesses est prévue sur l'arbre de sortie de boîte de vitesses (25).

6. Procédé de mise en oeuvre d'une transmission (10, 10a) d'un véhicule automobile notamment d'une transmission mécanique à double embrayage selon la revendication 1,
**caractérisé en ce qu'**
on génère la vitesse de rotation de synchronisation des arbres d'entrée de transmission (12, 13) d'un rapport de vitesse à passer à l'aide des machines électriques (34, 35 ; 40) couplées à l'arbre d'entrée de la transmission (12, 13) correspondant au rapport de vitesse cible.

7. Procédé de mise en oeuvre d'une transmission (10, 10a) d'un véhicule automobile notamment d'une transmission de commutation à double embrayage selon la revendication 1,
**caractérisé en ce que**
pour renforcer le couple appliqué par le moteur à combustion interne (11) à l'arbre de sortie (25), au moins une machine électrique (34, 35 ; 40) fournit un couple supplémentaire à l'arbre de sortie (25), ce couple agissant dans le même sens de rotation que celui fourni par le moteur à combustion interne (11).

8. Procédé de mise en oeuvre d'une transmission (10, 10a) d'un véhicule automobile notamment d'une transmission mécanique à double embrayage selon la revendication 1,
**caractérisé en ce que**
pour la récupération de l'énergie lorsque le véhicule fonctionne en mode de poussée inertielle, lorsque les embrayages (29, 30) sont ouverts, au moins l'une des machines électriques (34, 35 ; 40) est entraînée par son arbre d'entrée (12, 13) et fonctionne comme génératrice.
